# EUROPÄISCHE PATENTSCHRIFT

(11) **EP 2 989 703 B1**
(45) Veröffentlichungstag und Bekanntmachung des Hinweises auf die Patenterteilung: **22.03.2017**
(21) Anmeldenummer: 14728172.9
(22) Anmeldetag: 03.06.2014
(51) Int. Cl.: H02B 13/075, H02B 13/045

(54) **GASISOLIERTE MITTELSPANNUNGSSCHALTANLAGE**
GASINSULATED MEDIUM VOLTAGE SWITCHGEAR
APPAREILLAGE MOYENNE TENSION À ISOLATION GAZEUSE

(30) Priorität: 18.06.2013 DE 102013211341
(43) Veröffentlichungstag der Anmeldung: 02.03.2016
(73) Patentinhaber: Siemens Aktiengesellschaft, 80333 München (DE)
(72) Erfinder: RÖSSLER, Andreas, 35463 Fernwald (DE); STENGER, Stefan, 63863 Eschau (DE)
(86) Internationale Anmeldenummer: PCT/EP2014/061448
(87) Internationale Veröffentlichungsnummer: WO 2014/202379

(56) Entgegenhaltungen:
- EP-A1- 0 005 208
- EP-A2- 0 291 762
- WO-A1-2012/077963
- US-A- 5 715 134

## Beschreibung

Die Erfindung betrifft eine gasisolierte Mittelspannungsschaltanlage mit einem gekapselten Behälter zur Aufnahme von Komponenten der Mittelspannungsschaltanlage, mit einem Erdungskontakt und einem auf einer Außenseite des Behälters angeordneten Erdungssammelschienenanschluss.

Eine derartige gasisolierte Mittelspannungsschaltanlage ist aus dem landläufigen Stand der Technik, z. B. EP 0 005 208 A1, bekannt und umfasst einen gekapselten, gasdichten Behälter zur Aufnahme von Komponenten der Mittelspannungsschaltanlage, wie beispielsweise Sammelschienen, Leistungsschalter, Stromwandler oder dergleichen, wobei der gasisolierte Behälter beispielsweise mit SF6 als Isoliergas befüllt ist. Derartige Schaltanlagen weisen als weitere Komponenten einen Erdungsschalter auf, bei dem üblicherweise ein Erdungsbewegkontakt, welcher mit den Komponenten der Mittelspannungsschalteranlage in leitender Verbindung steht, im Falle einer durchzuführenden Erdung derart bewegt wird, dass er mit einem Erdungskontakt elektrisch leitend verbunden ist, welcher Erdungskontakt über den Erdungssammelschienenanschluss mit Erdpotential verbunden ist. Bei dem aus dem landläufigen Stand der Technik bekannten Schaltanlagen ist dies beispielsweise so gelöst, dass der Erdungskontakt innen im gasdichten Behälter an der Behälterwand verschraubt ist, wobei außen am gasdichten Behälter der Erdungssammelschienenanschluss befestigt, beispielsweise verschraubt ist, so dass die Erdung des im gasdichten Behälter angeordneten Erdungskontaktes über den gasdichten Behälter und dem Erdungssammelschienenanschluss stattfindet.

Aufgabe der vorliegenden Erfindung ist es, eine gasisolierte Mittelspannungsschaltanlage der eingangs genannten Art weiterzubilden, welche über einen einfachen und kostengünstigen Aufbau verfügt.

Erfindungsgemäß gelöst wird dies bei einer gasisolierten Mittelspannungsschaltanlage der eingangs genannten Art dadurch, dass der Erdungskontakt in einer Behälteröffnung stoffschlüssig befestigt ist und den Erdungssammelschienenanschluss aufweist und dass die stoffschlüssige Verbindung eine Löt- oder Schweissverbindung ist.

Mit anderen Worten ist bei der erfindungsgemäßen gasisolierten Mittelspannungsschaltanlage der Erdungskontakt mit dem Erdungssammelschienenanschluss aus einem Stück gebildet und in einer Behälteröffnung des gekapselten Behälters der gasisolierten Mittelspannungsschaltanlage stoffschlüssig befestigt, und zwar derart, dass durch die stoffschlüssige Befestigung des Erdungskontaktes in der Behälteröffnung diese gasdicht verschlossen ist, wobei der Erdungssammelschienenanschluss des Erdungskontaktes auf der Außenseite des gasdichten Behälters angeordnet ist und der Erdungskontakt selbst innen im gasdichten Behälter angeordnet ist. Die stoffschlüssige Befestigung eines derartigen Erdungskontaktes mit Erdungssammelschienenanschluss in einer solchen Behälteröffnung verringert daher den Befestigungsaufwand im Vergleich zu der aus dem landläufigen Stand der Technik bekannten Lösung mit separatem Erdungskontakt, welcher innen im Behälter befestigt ist und separatem Erdungssammelschienenanschluss, welcher auf der Außenseite des Behälters befestigt werden muss.

In einer vorteilhaften Ausgestaltung der Erfindung ist der Erdungssammelschienenanschluss durch mindestens eine in einer auf der Außenseite angeordneten ebenen Fläche des Erdungskontaktes angeordnete Sacklochbohrung gebildet ist. Eine oder mehrere Sacklochbohrungen sind in einfacher Weise geeignet, eine Erdungssammelschiene am Erdungssammelschienenanschluss zu befestigen, wobei durch die Sacklöcher in der ebenen Fläche des Erdungskontaktes auch die Gasdichtheit der gesamten Anordnung in einfacher Weise gewährleistet ist.

Erfindungsgemäss ist die stoffschlüssige Verbindung eine Löt- oder Schweißverbindung. Löten oder Schweißen sind einfache und kostengünstige Verfahren, um einen derartigen Erdungskontakt mit Erdungssammelschienenanschluss in einem gasdichten, gekapselten Behälter einer derartigen Mittelspannungsschaltanlage stoffschlüssig zu befestigen.

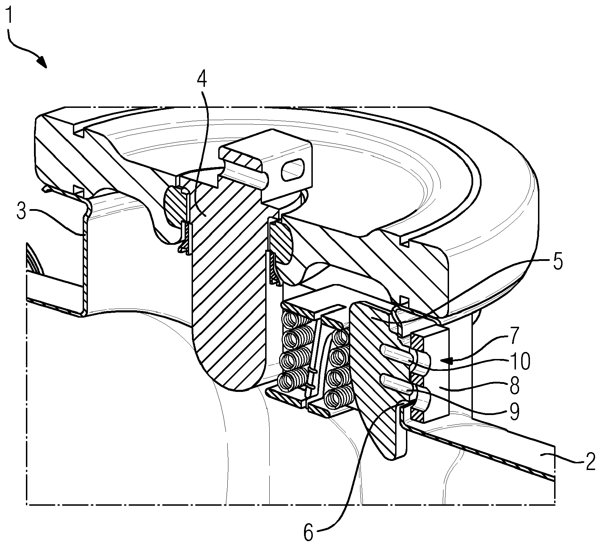

Die Erfindung wird im Folgenden anhand eines Ausführungsbeispiels und der Zeichnung näher erläutert, deren einzige Figur eine dreidimensionale schematische Teilansicht eines Ausführungsbeispiels einer erfindungsgemäßen gasisolierten Mittelspannungsschaltanlage zeigt.

Die Figur zeigt eine teilweise schematische Schnittansicht durch eine gasisolierte Mittelspannungsschaltanlage 1 mit einem gasdichten, gekapselten Behälter 2, in welchem figürlich nicht weiter dargestellte Komponenten der Mittelspannungsschaltanlage wie beispielsweise Sammelschienen, Schaltgeräte wie Leistungsschalter oder Trennschalter oder Erdungsschalter, Wandler oder Kabelanschlüsse angeordnet sind, wobei der gasdichte gekapselte Behälter 2 mit SF6 als Isoliergas befüllt ist. Der gasdichte Behälter 2 weist einen Flansch 3 auf, durch welchen sich eine leitende Verbindung 4 hindurch erstreckt, beispielsweise um den über die gasisolierte Mittelspannungsschaltanlage 1 zu verteilenden Strom in einen anderen Funktionsbereich der gasisolierten Mittelspannungsschaltanlage zu überführen. Ein Erdungskontakt 5 ist in einer Behälteröffnung 6 des gasdichten gekapselten Behälters 2 stoffschlüssig befestigt, und zwar durch Löten oder Schweißen, so dass durch den stoffschlüssigen in der Behälteröffnung 6 befestigten Erdungskontakt 5 die Behälteröffnung 6 wiederum gasdicht verschlossen ist und ein Gasaustritt aus dem Innenraum des Behälters 2 nach außen sicher verhindert ist. Der Erdungskontakt 6 erstreckt sich somit aus dem Innenraum des Behälters 2 nach außen und weist auf seiner Außenseite des Behälters einen Erdungssammelschienenanschluss 7 auf, welcher durch eine ebene Fläche 8 gebildet ist, die im Ausführungsbeispiel mit zwei Sacklochbohrungen 9 und 10 versehen ist, welche Sacklochbohrungen 9 und 10 zum Befestigen einer figürlich nicht dargestellten Erdungssammelschiene vorgesehen sind. Ein figürlich ebenfalls nicht weiter ausgeführter Bewegkontakt, welcher im Inneren des gekapselten Behälters angeordnet ist und mittels einer Antriebseinheit bewegbar ist, wird im Falle einer notwendigen Erdung in leitende Verbindung mit dem Erdungskontakt 5 gebracht, so dass über den Erdungskontakt 5 und dem Erdungssammelschienenanschluss 7 in Verbindung mit der figürlich nicht dargestellten Erdungssammelschiene eine Erdung der Komponenten der Mittelspannungsschaltanlage ermöglicht ist.

### Bezugszeichenliste

- 1: gasisolierte Mittelspannungsschaltanlage
- 2: gekapselter Behälter
- 3: Flansch
- 4: leitende Verbindung
- 5: Erdungskontakt
- 6: Behälteröffnung
- 7: Erdungssammelschienenanschluss
- 8: ebene Fläche
- 9,10: Sacklochbohrungen

## Patentansprüche

1. Gasisolierte Mittelspannungsschaltanlage (1) mit einem gekapselten Behälter (2) zur Aufnahme von Komponenten der Mittelspannungsschaltanlage, mit einem Erdungskontakt (5) und einem auf einer Außenseite des Behälters (2) angeordneten Erdungssammelschienenanschluss (7),
**dadurch gekennzeichnet dass**
der Erdungskontakt (5) in einer Behälteröffnung (6) stoffschlüssig befestigt ist und den Erdungssammelschienenanschluss (7) aufweist und dass die stoffschlüssige Verbindung eine Löt- oder Schweissverbindung ist.

2. Gasisolierte Mittelspannungsschaltanlage (1) nach Anspruch 1,
**dadurch gekennzeichnet dass**
der Erdungssammelschienenanschluss (7) durch mindestens eine in einer auf der Außenseite angeordneten ebenen Fläche (8) des Erdungskontaktes (5) angeordnete Sacklochbohrung (9, 10) gebildet ist.

## Claims

1. Gas-insulated medium-voltage switchgear assembly (1) with an encapsulated container (2) for receiving components of the medium-voltage switchgear assembly, with a grounding contact (5) and a grounding busbar terminal (7) arranged on an outer side of the container (2),
**characterized in that**
the grounding contact (5) is secured by integral bonding in a container opening (6) and has the grounding busbar terminal (7) and **in that** the integrally bonded connection is a brazed or a welded connection.

2. Gas-insulated medium-voltage switchgear assembly (1) according to Claim 1,
**characterized in that**
the grounding busbar terminal (7) is formed by at least one blind-hole bore (9, 10) arranged in a planar surface (8) of the grounding contact (5) that is arranged on the outer side.

## Revendications

1. Installation (1) de distribution à moyenne tension isolée par du gaz, comprenant un récipient (2) blindé de réception de composants de l'installation de distribution à moyenne tension, comprenant un contact (5) de mise à la terre et une borne (7) de barre collectrice de mise à la terre montée sur un côté extérieur du récipient (2),
**caractérisée en ce que**
le contact (5) de mise à la terre est fixé à complémentarité de matière dans une ouverture (6) du récipient et à la borne (7) de barre collectrice de mise à la terre et **en ce que** la liaison à complémentarité de matière est une brasure ou une soudure.

2. Installation (1) de distribution à moyenne tension isolée par du gaz suivant la revendication 1,
**caractérisée en ce que**
la borne (7) de la barre collectrice de mise à la terre est formée par au moins un trou (9, 10) borgne ménagé dans une surface (8), plane et disposée du côté extérieur, du contact (5) de mise à la terre.
